# EUROPEAN PATENT APPLICATION

(11) **EP 4 651 433 A1**
(43) Date of publication of application: **19.11.2025**
(21) Application number: 24175658.4
(22) Date of filing: 14.05.2024
(51) Int. Cl.: H04L 9/40, H04L 67/12

(54) **A METHOD AND SYSTEM FOR MEDICAL DEVICE IDENTITY AND ACCESS MANAGEMENT**

(71) Applicant: Roche Diabetes Care GmbH, 68305 Mannheim (DE)
(72) Inventor: FISCHER, Christoph, 68305 Mannheim (DE)
(74) Representative: Altmann Stößel Dick Patentanwälte PartG mbB

(57) **Abstract**

A method for medical device identity and access management is proposed. The method comprising the following steps
a) a medical device (112) to be controlled by a digitally connected device (116), transmitting, via an untrusted connection, to the digitally connected device (116) identifying information from the medical device (112), wherein the medical device (112) comprises at least one interface for communication with the digitally connected device (116) specified by the medical device manufacturer (120);
b) a medical device identity and access management cloud backend (114) controlled by the medical device manufacturer (120), receiving an application programming interface, API, request from the digitally connected device (116), wherein the API request comprises a request for authentication information generated by the digitally connected device (116), wherein the request for authentication information comprises identifying information about the digitally connected device (116), generating, upon verifying and validating the API request and the request for authentication information, the authentication information comprising a certificate or a signature, wherein the authentication information depends on the identifying information of the digitally connected device (116) as pre-specified by the medical device manufacturer (120), signing the authentication information by using a private key of the medical device identity and access management cloud backend (114), and transmitting an API response comprising the signed authentication information to the digitally connected device (116);
c) receiving via the untrusted connection at the medical device (112) from the digitally connected device (116) the signed authentication information, wherein, upon verifying and validating the authentication information at the medical device (112), an application layer security is established between the medical device (112) and the digitally connected device (116) using at least one cryptographic key exchange procedure.

## Description

### Technical Field

The invention refers to a method for medical device identity and access management, a medical device identity and access management system (MDIAMS), a computer program, a computer-readable storage medium and a non-transient computer-readable medium.

### Background art

Users of medical devices (MDs) in general and diabetes management devices in particular have a diversity of needs and goals. They expect to connect MDs to their smartphone, view data in a cloud, easily share the information with health care providers (HCPs), and interoperate with their choice of devices. An example, of a MD for diabetes management is a continuous glucose monitor (CGM), which provide therapy-relevant information about the current glucose level and trend to a digitally connected device (DCD) like an app running on a consumer smartphone. Another example is an insulin pump, which insulin dosing is commanded and controlled by a dedicated remote controller (i.e., a DCD with a remote control function). When a CGM and an insulin pump is combined with a remote controller, which comprise an algorithm to automatically receive the CGM values and adjust based on the CGM values the insulin dosing of the insulin pump, they form an automated insulin delivery (AID) system. AID is a transformational therapy for people with insulin-requiring diabetes, which brings them true relief day and night. While some AID systems include a CGM, insulin pump, and remote controller that are all manufactured by a single entity to ensure compatibility, other systems use interoperable system elements from different manufacturers.

It is highly challenging for a single manufacturer to serve these diverse needs. Therefore, connection of multiple devices, services and digital products from different companies may be combined in an open ecosystem. Furthermore, manufacturers of regulated MDs must address cybersecurity. Most approaches to vulnerability assessment are not repeatable, scalable, systematic, or auditable. A set of international "Secure Plug & Play Interoperability" standards, implementation guidelines, tools, and certification path for MD manufacturers exists, which regulators and standards bodies embrace.

However, in such an ecosystem with various legal manufacturers and cybersecurity vulnerabilities found repeatedly in communication stacks, operating systems, microcontrollers, and the Bluetooth standard itself, the identification, authentication, authorization, and accountability (IAAA) of the involved system elements as well as protect, detect, and respond to cybersecurity incidents are critical important.

Known solutions may provide cryptographic keys (e.g., symmetric key, public key, start value to create a key) to command or control a (medical) device together with the device, e.g., by providing a QR code on the device. In practice this is a blind trust approach (i.e., the opposite of zero trust approach) because without IAAA everyone in physical range has access to the cryptographic keys. This can result in limitations like if the end-user does not ensure that the cryptographic key is not compromised before usage (e.g., no security seal broken on a leaflet or package) or does not completely destroy the cryptographic key direct after usage (e.g., because it is on the device), a malicious actor can get access to these cryptographic keys and perform with that man-in-the-middle attacks or, depending on the key agreement scheme, use it later to take over the control of the device. Furthermore, this kind of interface can be reverse-engineered so that unintended usage of the device cannot be blocked. In addition, later in the market identified unsafe combination of certain hardware/software versions of a MD and a DCD cannot be blocked.

An example of a private key supplied with the packaging of the MD is EP3087771B1. EP3087771B1 describes systems, devices, and methods that allow the authentication of devices within analyte monitoring systems. The analyte monitoring systems can be in vivo systems and can include a sensor control device with a sensor and accompanying circuitry, as well as a reader device for communicating with the sensor control device. The analyte monitoring systems can interface with a trusted computer system located at a remote site.

Above shortcomings can be addressed by some kind of authorization service requiring an online connection of the remote controller. Such known solutions, e.g. as described in US 9,980,140 B1, US 2005/0204134 A1, US 2011/0145588 A1, WO 2021/257664, may provide cryptographic keys (e.g., symmetric key, public key, start value to create a key) via the authorization service to the remote controller so that the remote controller can command or control a (medical) device. This requires that the cryptographic keys are transferred from the production system of the device to the authorization service. To protect the production system against attacks this must be either "air-gapped" (i.e., no physical and logical connection to outside) requiring manual transfer of the cryptographic keys to the authorization service. Alternatively, if there are connections between the production system and authorization service, the production system requires "strong" security protection and monitoring. In addition, the authorization service itself requires "strong" security protection and monitoring because it stores the cryptographic keys. Furthermore, the authorization service requires a reliable connection, high up-time, and good load-balancing because it has to deal directly with all electronic devices requesting cryptographic keys.

When the DCD is a consumer smartphone using Bluetooth, another problem may be that the connection between the MD and the smartphone is typically only protected on the so called "Bluetooth Transport Layer". This means that the smartphone's operating system, involved communication stacks, and other Apps running on the smartphone have access to the data exchange with the MD creating security and privacy issues. On top, security flaws are re-peatingly found in Bluetooth implementations.

### Problem to be solved

It is therefore desirable to provide a method and a system which address the above-mentioned shortcomings of known methods and systems. Specifically, methods and systems shall be proposed which allow for identification, authentication, authorization, and accountability of the involved system elements as well as protecting, detecting, and responding to cybersecurity incidents.

### Summary

This problems is addressed by method for medical device identity and access management, a medical device identity and access management system (MDIAMS), a computer program, a computer-readable storage medium and a non-transient computer-readable medium with the features of the independent claims. Advantageous embodiments which might be realized in an isolated fashion or in any arbitrary combinations are listed in the dependent claims as well as throughout the specification.

As used in the following, the terms "have", "comprise", "include", or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e., a situation in which A solely and exclusively consists of B) and to a situation in which, besides B, one or more further elements are present in entity A, such as element C, elements C and D or even further elements.

Further, it shall be noted that the terms "at least one", "one or more", or similar expressions indicating that a feature or element may be present once or more than once typically will be used only once when introducing the respective feature or element. In the following, in most cases, when referring to the respective feature or element, the expressions "at least one" or "one or more" will not be repeated, non-withstanding the fact that the respective feature or element may be present once or more than once.

Further, as used in the following, the terms "preferably", "more preferably", "particularly", "more particularly", "specifically", "more specifically", or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in such way with other optional or non-optional features of the invention.

In a first aspect, a method for medical device identity and access management is disclosed.

The term "medical device" (MD) as used herein is a broad term and is to be given its ordinary and customary meaning to a person of ordinary skill in the art and is not to be limited to a special or customized meaning. The term specifically may refer, without limitation, to a device configured for performing at least one medical function. The MD may be a portable MD, a personal health device (PHD), or a point-of-care device (PoCD). For example, the MD may be selected from the group consisting of: an insulin pump, a continuous glucose monitoring device, a blood glucose monitoring device, a sport and fitness device, or a combination of this functions in one device. The software part in the MD may be optimized for embedded usage regarding processing power, memory usage, and energy consumption.

For data exchange and security between the system elements, standards like ISO/IEEE (e.g., ISO/IEEE 11073 family of standards), ITU (e.g., X.509 certificates), and Bluetooth SIG (e.g., Continuous Glucose Monitoring Service, Insulin Delivery Service, Authorization Control Service) may be used. X.509 is an International Telecommunication Union (ITU) standard, in particular a format for public-key-certificates. This, in combination with using the cloud services as will be described in detail below, can enables true "Secure Plug & Play Interoperability" and can create trust among regulatory bodies, external partners, and end-users.

The term "identity and access management" (IAM) as used herein is a broad term and is to be given its ordinary and customary meaning to a person of ordinary skill in the art and is not to be limited to a special or customized meaning. The term specifically may refer, without limitation, to ensuring secure access to at least one resource. IAM may involve two measures identity management and access management. The identity management may comprise authentication and/or verifying an identity of the other device or the user requesting access to the resource. In case the other device or the user is authenticated and/or the identity is verified, the access management determines which resources the other device or the user is authorized to access and ay grant access rights. The IAM may support the Identification, Authentication, Authorization, and Accountability (IAAA). The IAM may allow protecting security issues, detecting security issues, and responding to security issues.

The method may be computer-implemented. The term "computer-implemented" as used herein is a broad term and is to be given its ordinary and customary meaning to a person of ordinary skill in the art and is not to be limited to a special or customized meaning. The term specifically may refer, without limitation, to a method involving at least one computer and/or at least one computer network. The computer and/or computer network may comprise at least one processor which is configured for performing at least one of the method steps of the method according to the present invention. Preferably each of the method steps is performed by the computer and/or computer network. The method may be performed completely automatically, specifically without user interaction. The term "automatically" as used herein is a broad term and is to be given its ordinary and customary meaning to a person of ordinary skill in the art and is not to be limited to a special or customized meaning. The term specifically may refer, without limitation, to a process which is performed completely by means of at least one computer and/or computer network and/or machine, in particular without manual action and/or interaction with a user.

The method comprises the following method steps, which, as an example, may be performed in the given order. However, a different order is also feasible. Further, it is possible to perform two or more of the method steps simultaneously or in a fashion overlapping in time. Further, it is also possible to perform one, more than one or even all of the method steps repeatedly.

The method comprises the following steps
a) a MD to be controlled by a digitally connected device (DCD)
   transmitting, via an untrusted connection, to the DCD identifying information from the MD, wherein the MD comprises at least one interface for communication with the DCD specified by the MD manufacturer;
b) a medical device identity and access management cloud backend (MDIAMCB) controlled by the MD manufacturer
   receiving an application programming interface (API) request from the DCD, wherein the API request comprises a request for authentication information generated by the DCD, wherein the request for authentication information comprises identifying information about the DCD,
   generating, upon verifying and validating the API request and the request for authentication information, authentication information comprising a certificate or a signature, wherein the authentication information depends on the identifying information of the DCD as pre-specified by the MD manufacturer,
   signing the authentication information by using a private key of the MDIAMCB, and
   transmitting an API response comprising the signed authentication information to the DCD;
c) receiving via the untrusted connection at the MD from the DCD the signed authentication information, wherein, upon verifying and validating the authentication information at the MD, an application layer security is established between the MD and the DCD using at least one cryptographic key exchange procedure.

After performing steps a) to c), access is granted to the MD for the DCD manufacturer.

For end-users, e.g. a person with diabetes or a caregiver, who use one or more MDs, the method according to the present invention can enable seamless, safe, secure, and reliable life cycle. The method according to the present invention supports Secure Plug & Play Interoperability with MDs manufactured by the MD manufacturer in combination with systems from said manufacturer of the MD and third-parties systems during online and offline scenarios from premarket to post-market while maintaining security and privacy.

The method may comprise at least one initializing step. Interface control information may be shared between the MD manufacturer and DCD manufacturer. The interface control information may comprise one or more of: information about interface to the MD; public keys for transmission layer security; mobile gateways information; mobile entry points information; information about the API to the MDIAMCB; credentials for the interfaces such as URLs, VPN, tokens, and/or keying material. The credentials can be used for the interface to the MD. The credentials may be used for the interface to the MDIAMCB. The MD, and optionally the DCD and a digitally connected device cloud backend (DCDCB), respectively, may comprise a public key of the MDIAMCB. The public key of the MDIAMCB may be exchanged upfront, e.g., out-of-bond. The public key may be provided to the MD during its production. The DCD and the DCDCB may get the public key to support additional checks of the granted certificate by the DCD and the DCDCB.

As outlined above, step a) comprises the MD transmitting, via an untrusted connection, to the DCD identifying information from the MD. The MD may send the MD identifying information upon request from the DCD or automatically when the untrusted connection is established. The MD comprises at least one interface for communication with the DCD specified by the MD manufacturer.

The term "digitally connected device" (DCD) as used herein is a broad term and is to be given its ordinary and customary meaning to a person of ordinary skill in the art and is not to be limited to a special or customized meaning. The DCD may comprise at least one element selected from the group consisting of a dedicated controller hardware, a lockdown smartphone, or a consumer smartphone. For example, the DCD may be a type of embedded DCD, e.g. a diabetes manager with dedicated controller hardware, a lockdown smartphone, e.g. at least one application (App) pre-installed on a dedicated smartphone, wherein the smartphone is shipped with the medical solution, or a consumer smartphone, e.g. App downloaded from a smartphone application store. The DCD may be a third party controller or may be manufactured by the same manufacturer as the MD. The term specifically may refer, without limitation, to a device configured for providing the remote control function. The term "remote control" as used herein is a broad term and is to be given its ordinary and customary meaning to a person of ordinary skill in the art and is not to be limited to a special or customized meaning. The term specifically may refer, without limitation, to a function for controlling the MD via a further device and/or from a distance by using a further device. The term "controlling" the MD as used herein is a broad term and is to be given its ordinary and customary meaning to a person of ordinary skill in the art and is not to be limited to a special or customized meaning. The term specifically may refer, without limitation, to at least one process of executing at least one function of the MD and/or accessing to at least one resource of MD such as of a database. The controlling may comprise controlling operation of the MD such as one or more of turning on and/or off the MD or a function of the MD, performing at least one medical function, transmitting data and the like. The controlling may be performed via a remote controller.

The term "request" as used herein is a broad term and is to be given its ordinary and customary meaning to a person of ordinary skill in the art and is not to be limited to a special or customized meaning. The term specifically may refer, without limitation, to a message, e.g. comprising at least one demand for one or more of information and/or access.

The term "interface for communication" as used herein is a broad term and is to be given its ordinary and customary meaning to a person of ordinary skill in the art and is not to be limited to a special or customized meaning. The term specifically may refer, without limitation, to an item or element forming a boundary configured for transferring information. The interface for communication may be configured for transferring information from a computational device, e.g. a computer, such as to send or output information, e.g. onto an-other device. Additionally or alternatively, the interface for communication may be configured for transferring information onto a computational device, e.g. onto a computer, such as to receive information. The communication interface may specifically provide means for transferring or exchanging information. The term "untrusted connection" as used herein is a broad term and is to be given its ordinary and customary meaning to a person of ordinary skill in the art and is not to be limited to a special or customized meaning. The term specifically may refer, without limitation, to a connection between two elements of a communication network outside of the environment and control of the MD manufacturer. The communication between the DCD and MD may be performed via Bluetooth BR/EDR, Bluetooth LE, an IEEE 802.11 wireless protocol ("WiFi"), or Near Field Communication or the like.

The term "identifying information from the medical device" as used herein is a broad term and is to be given its ordinary and customary meaning to a person of ordinary skill in the art and is not to be limited to a special or customized meaning. The term specifically may refer, without limitation, to any information which can be used for identifying the MD. The identifying information from the MD may comprises one or more of MD type ID(s), personal MD instance ID, MD hardware version(s), MD software version(s), and/or MD certificate/signature nonce. In step c), the MD uses identifying information for verifying and validating the authentication information. The MD certificate/signature nonce can be used to limit the authentication information to a one-time usage.

As outlined above, in step b), the MDIAMCB controlled by the MD manufacturer receives an API request from the DCD. The DCD may send the API request to the MDIAMCB. The API request may be send from the DCD directly. Alternatively, in step b), an API request may be transmitted from the DCD over a DCDCB and the API response is transmitted over the DCDCB to the DCD. The DCD may sends the API request to the DCDCB. The DCDCB, upon verifying and validating the API request and the request for authentication information, may send another API request to the MDIAMCB. The API request from DCD to the DCDCB may be different from the API request from DCDCB to MDIAMCB.

Data exchange between the DCD and the DCDCB and between the DCDCB and the MDIAMCB may be performed by using transport layer security (TLS). Transport layer security relates to a cryptographic protocol designed to provide communications security over a computer network. For example, a Transport Layer Security protocol may be used. For further information with respect to TLS reference may be made to www.ietforg/technologies/security/.

The manufacturer of the MD, MDIAMCB, DCD, and/or DCDCB may be identical or may be different manufacturers.

The MD, DCD, DCDCB, and MDIAMCB have a zero trust relationship. The term "zero trust relationship" as used herein is a broad term and is to be given its ordinary and customary meaning to a person of ordinary skill in the art and is not to be limited to a special or customized meaning. The term specifically may refer, without limitation, to a relationship in which the security and data integrity of each system element is independent from the others. The present invention in contrast to known techniques, can allow for a zero trust environment. Because the cloud service part and the embedded software part enforce the data exchange and security, the MD manufacturer does not need to have any insights into the DCD, and if used the DCDCB, including that no verification/review of them by the MD manufacturer is required. This can simplify in cooperating with third parties.

The term "cloud backend" as used herein is a broad term and is to be given its ordinary and customary meaning to a person of ordinary skill in the art and is not to be limited to a special or customized meaning. The term specifically may refer, without limitation, to an element of a cloud computing architecture configured for powering a front-end architecture of the cloud computing architecture. The cloud backend may comprise, for example, hardware components and storage. The cloud backend may be taken care of by the cloud service provider offering cloud software.

The term "medical device identity and access management cloud backend" (MDIAMCB) as used herein is a broad term and is to be given its ordinary and customary meaning to a person of ordinary skill in the art and is not to be limited to a special or customized meaning. The term specifically may refer, without limitation, to a cloud backend controlled by the MD manufacturer. The MDIAMCB may comprise at least one API. The API may be a Representational State Transfer (REST) or a Simple Object Access Protocol (SOAP) API. With respect to REST reference may be made to https://www.techtarget.com/searchapparchitecture/definition/REST-REpresentational-State-Transfer and with respect to SOAP reference may be made to www.w3.org/TR/soap/.

The term "digitally connected device cloud backend" (DCDCB) as used herein is a broad term and is to be given its ordinary and customary meaning to a person of ordinary skill in the art and is not to be limited to a special or customized meaning. The term specifically may refer, without limitation, to a cloud backend controlled by the manufacturer of the DCD. The DCDCB may comprise at least one API. The API may be a Representational State Transfer (REST) or a Simple Object Access Protocol (SOAP) API.

The API request comprise a request for authentication information generated by the DCD. The request for authentication information comprises identifying information about the DCD and a public key of a cryptographic key pair generated by the DCD for usage with the MD. The request for authentication information is signed with a private key of said cryptographic key pair.

The term "identifying information about the DCD" as used herein is a broad term and is to be given its ordinary and customary meaning to a person of ordinary skill in the art and is not to be limited to a special or customized meaning. The term specifically may refer, without limitation, to any information which can be used for identifying the DCD. The identifying information from the DCD may comprise one or more of DCD type ID(s), DCD instance ID, DCD hardware version(s), and/or DCD software version(s).

The method may comprise generating a cryptographic key pair by the DCD for usage with the MD. The cryptographic key pair generated at the DCD may comprise an ephemeral public and private key pair and/or a static public and private key pair. The ephemeral public and private key pair may be constrained for a MD instance. The static public and private key pair relates to all MD instances of one type of MD. For example, the DCD may create a new ephemeral key pair for each MD instance to which if wants to establish a secure connection. Thus, exactly one DCD-MD instance key-establishment is ensured, e.g. as recommended in NIST SP 800-56A. For example, the DCD may create a new static key pair for each MD to which it wants to establish in the future a secure connection. The static key pair may be intended as multiple DCD-MD instances key-establishment, e.g., as recommended in NIST SP 800-56A.

The request for authentication information may comprise a certificate signing request or a data structure with a signature defined by the MD manufacturer. The term "certificate signing request" (CSR) as used herein is a broad term and is to be given its ordinary and customary meaning to a person of ordinary skill in the art and is not to be limited to a special or customized meaning. The term specifically may refer, without limitation, to a message sent from an applicant in order to apply for a digital identity certificate. The CSR may comprise identifying information, e.g. in step b) about the DCD, a public key for which the certificate should be issued, and a proof of authenticity including integrity protection, e.g. a digital signature. The integrity protection in step b) may be ensured by that the certificate signing request is signed with the private key of said crypto-graphic key pair generated by the DCD for usage with the MD. The CSR may have a specific format such as according to a PKCS #10 specification, a capable Certificate Request Message Format (CRMF) or a SPKAC (Signed Public Key and Challenge) format. The CSR may be defined by the MD manufacturer. The CSR may be a request for a certificate for the public key from the MDIAMCB: The certificate may be a X.509 certificate. Certificate scenarios may be used when a standard public or private key infrastructure (PKI) is used. Additionally or alternatively, the authentication information may comprise a data structure with a signature. The authentication information may be a signature request, e.g. in accordance with Ed25519. The signature scenarios may be used when the data exchange with and the required memory in the medical device needs to be smaller than a certificate.

The request for authentication information may further comprise a public key of a crypto-graphic key pair generated by the DCD for usage with the MD. The request for authentication information may be signed with a private key of said cryptographic key pair.

As outlined above, the API request may be transmitted directly to the MDIAMCB or an API request may be transmitted from the DCD to the DCDCB. The transmission(s) may be performed using a TLS protocol. The DCDCB may verify and validate the API request and the request for authentication information. The DCDCB may send an API request including the request for authentication information to the MDIAMCB. The API request from the DCD and the DCDCB may be different from each other.

The MDIAMCB may generate, upon verifying and validating the API request and the request for authentication information, the authentication information. The authentication information may comprise a certificate or a signature, depending on whether a certificate scenario or a signature scenario is used. The authentication information depends on the identifying information of the DCD as pre-specified by the MD manufacturer.

Step b) further comprises signing the authentication information by using a private key of the MDIAMCB. The MDIAMCB may grant with the signed authentication information to the DCD authorization to all or a subset of functionalities of the MD. The signed authentication information can be used by the MD and/or MDIAMCB to keep the DCD accountable for its commands towards the MD.

For example, the signed authentication information may comprise one or more of the MD instance ID, the medical device type ID, an unconstrained signed authentication information, a MD certificate/signature nonce. These may be part of the X.509 certificate.

For example, the signed authentication information may comprise the MD instance ID. This may ensure that the signed authentication information is constrained usable only with this MD instance. Such a constrained signed authentication information is denoted as MD-constrained herein. For example, the signed authentication information may comprise the MD type ID, but no MD instance ID. This may ensure that the signed authentication information is unconstrained usable with all MDs of this type. For example, the signed authentication information may grant at least one access level, wherein the access level is pre-specified by the MD manufacturer.

For example, the signed authentication information may comprise an unconstrained signed authentication information, also denoted as wildcard or NM-wildcard. The unconstrained signed authentication information may be usable for connection between the MD and the DCD in an offline scenario in which the DCD has no connection to the DCDCB, or to the MDIAMCB. The MD may be configured for enforcing that the unconstrained signed authentication information is replaced by the DCD in a defined time with a MD constrained signed authentication information. When the unconstrained signed authentication information is used, limited access to the MD may be granted.

A default configuration stored in the MD during production MD may be modified by the MDIAMCB through adding additional configuration information to the signed authentication information. The configuration information may comprises one or more of access rights granted, use time of the signed authentication information, operation time of the MD, and/or activation/deactivation of MD functions.

The method may support IAAA of the MD, DCD, and optionally the DCDCB via the MDIAMCB as well as protecting, detecting, and responding to cybersecurity incidents in a cybersecurity framework. One MDIAMCB instance can support multiple types of MDs with various use scenarios at the same time by combining the following: using a certificate or signature, using a MD-wildcard or MD-constrained, using a base or extended MD-constrained certificate. The certificate (e.g., X.509) scenarios may be used when a standard public or "private key infrastructure" (PKI) should be used. The signature scenarios (e.g., Ed25519) may be used when the data exchange with and the required memory in the MD needs to be smaller than a certificate. The wildcard scenarios may be used when command or control over all MD instances of one MD type (e.g., insulin micropump, CGM) should be granted to a DCD. The MD-constrained scenarios may be used when command or control over one specific MD instance should be granted to a DCD. A MD-wildcard certificate/signature can be also pre-fetched by the DCD so that it can later be used by the DCD to connect to a MD even if the DCD has no connection to its cloud backend. Depending on the use scenario, the MD can enforce that a MD-wildcard certificate/signature must be replaced by the DCD in a defined time with a MD-constrained certificate/signature so that the MDIAMCB can still track which DCD instance is connected with which MD instance. A base scenario means that the default configuration stored in the MD during production may be used by the MD. An extended scenario means that one or more MD default configurations may in combination with this specific DCD instance or type are overwritten (e.g., additional access rights granted, use time extended, predefined functions active). An exemplary use scenario may be using an "extended MD-constrained certificate".

These features can be also combined. For example, a MD-wildcard certificate/signature could grant limited access (e.g., limited reading access and/or limited control access) and only with a MD-constrained certificate/signature full access may be granted (e.g., full reading access and/or full control access). Also between certificates/signatures can different rights be granted (e.g., an App of the MD manufacturer can provide more value to a customer than a third-party App or different access levels between third-party Apps).

Step b) further comprises transmitting an API response comprising the signed authentication information to the DCD. For example, the signed authentication information may be transmitted directly from the MDIAMCB to the DCD. The MDIAMCB may receive the API request from the DCD. The MDIAMCB, upon verifying and validating the API request and the request for authentication information, may send an API response with the signed authentication information to the DCD.

Alternatively, for example, the DCDCB may receive the API response from the MDIAMCB. The DCDCB, upon verifying and validating the API response and the signed authentication information, sends an API response to the DCD, in particular another API response. The API response from DCDCB to the DCD may be different from the API response from MDIAMCB to DCDCB.

Step c) comprises receiving via the untrusted connection at the MD from the DCD the signed authentication information. Upon verifying and validating the authentication information at the MD, in particular, the signed authentication information, an application layer security is established between the MD and the DCD using at least one cryptographic key exchange procedure. The term "application layer security" as used herein is a broad term and is to be given its ordinary and customary meaning to a person of ordinary skill in the art and is not to be limited to a special or customized meaning. The term specifically may refer, without limitation, to protection at the application layer from malicious attacks. The application layer security may be between an App running on the DCD and firmware running on the MD. For example, establishing the application layer security may comprises generating a shared secret. The DCD may send a request for key agreement to the MD. The request may comprise the signed authentication information. The MD, in case the signed authentication information is verified and validated, may perform its part of the key agreement. The DCD, in case the key agreement information from the MD is verified and validated, may perform its part of the key agreement. The shared secret may be used as a key or may be used for deriving another key. The key or the derived key may be used for subsequent communication between the DCD and the MD. For example, a key agreement between MD and DCD is performed according to Diffie-Hellman (DH) key agreement procedure, Password Authenticated Key Exchange by Juggling (J-PAKE) key agreement procedure, or Elliptic-curve Diffie-Hellman (ECDH) key agreement procedure. Other options may be possible, e.g. using one of more of a password, two-factor security token (e.g. an RSA token), or public key based key agreement systems.

The method may comprise monitoring by the MDIAMCB storing DCD to MD binding information. The method may comprise monitoring by the MDIAMCB one or more of: a connection of MD and DCD; which DCD instance is connected with which MD instance; which DCD instance over which DCDCB instance requests; frequency of requests from the DCD and/or DCDCB.

The method may comprise identification, authentication, authorization, and accountability (IAAA) of the involved system element by the MDIAMCB. The method may comprise detecting and blocking unsafe combinations of MD and DCD by the MDIAMCB not granting a signed authentication information and triggering alerts based on one or more of the identifying information from the MD, DCD, and/or DCDCB. The method may comprise protecting, detecting, and responding to cybersecurity attacks by the MDIAMCB not granting a signed authentication information and triggering alerts based on one or more of the identifying information from the MD, identifying information from the DCD, identifying information from the DCDCB, API request(s), frequency of requests, origin of request(s), and/or date/time of request(s). The method may comprise one or more of: monitoring of the involved system elements, identifying of the involved system elements, authenticating of the involved system elements, authorizing of the involved system elements, and accounting of the involved system elements; detecting and blocking unsafe combinations of MD and DCD; and/or protecting, detecting, and responding to cybersecurity attacks. This can be done without requiring end-user preparation, interaction, and/or intervention.

In a further aspect, a MDIAMS is disclosed, comprising at least one MD, at least one MDIAMCB, at least one DCD, and optionally at least one DCDCB. The MDIAMS is configured for performing a method for medical device identity and access management according to the present invention, such as according to any one of the embodiments of the method described above and/or according to any one of the embodiments of the method described in further detail below.

The term "system" as used herein is a broad term and is to be given its ordinary and customary meaning to a person of ordinary skill in the art and is not to be limited to a special or customized meaning. The term specifically may refer, without limitation, to an arbitrary set of interacting or interdependent components parts forming a whole. Specifically, the components may interact with each other in order to fulfill at least one common function. The at least two components may be handled independently or may be coupled or connectable.

In a further aspect of the present invention, a computer program is proposed, the computer program comprising instructions which, when the program is executed by at least one processor of a computer or a computer network cause the processor to perform the method according to the present invention, such as according to any one of the embodiments of the method described above and/or according to any one of the embodiments of the method described in further detail below.

In a further aspect of the present invention, a computer-readable storage medium is proposed, specifically a non-transient computer-readable storage medium, the computer readable storage medium comprising instructions which, when the instructions are executed by at least one processor of a computer or a computer network cause the processor to perform the method according to the present invention, such as such as according to any one of the embodiments of the method described above and/or according to any one of the embodiments of the method described in further detail below.

As outlined above, the method as proposed herein are computer-implemented. As used herein, the terms "computer-readable data carrier" and "computer-readable storage medium" specifically may refer to non-transitory data storage means, such as a hardware storage medium having stored thereon computer-executable instructions. The computer-readable data carrier or storage medium specifically may be or may comprise a storage medium such as a random-access memory (RAM) and/or a read-only memory (ROM).

Thus, specifically, the method steps of the method as indicated above may be performed by using a computer or a computer network, preferably by using a computer program.

Further disclosed and proposed herein is a computer program product having program code means, in order to perform the method according to the present invention in one or more of the embodiments enclosed herein when the program is executed on a computer or computer network. Specifically, the program code means may be stored on a computer-readable data carrier and/or on a computer-readable storage medium.

The method and system as proposed herein provide a large number of advantages over methods and devices of similar kind. Specifically, the above-mentioned technical challenges may be addressed.

The present invention allows for Secure Plug and Play Interoperability can be realized across manufactures. Compared to known solutions, this invention enables a zero trust environment in which the security and data integrity of each system element is independent from the others. Because the cloud service part and the embedded software part enforce the data exchange and security, the MD manufacturer does not need to have any insights into the DCD and DCDCB, including that no verification/review of them by the MD manufacturer is required. This especially helps in cooperating with third parties.

The present invention proposes to establish on top of the Bluetooth "Transport Layer Security" (e.g., passkey entry, numeric key comparison) in addition an "Application Layer Security" between an App running on the DCD and Firmware running on the MD. The used Bluetooth "Authorization Control Service" (ACS) allows for creating a "secure tunnel" making the whole method independent and/or protected against any operating system, stacks, soups, apps, etc. running below/beside the tunnel. In principle, even the Bluetooth "Transport Layer Security" can be removed because it is not required anymore. An extra layer of security is achieved without compromising user experience (e.g., the end-user does not need to enter/compare any key in order to make the secure connection).

For example, on the MD-side standards from US NIST (i.e., cryptographic functions) also recommended by EU ENISA, ITU (i.e., X.509 certificates), and Bluetooth SIG (i.e., ACS) may be used. The present invention proposes to combine and extend these standards with cloud services in a novel way. This can enable true "Secure Plug & Play Interoperability" and creating trust among regulatory bodies, external partners, and end-users.

Compared to known solutions, the present invention does not require any data exchange between a production system of the MD and an authorization service connected to the internet. With that, the production system can be "air-gapped" from the internet. In addition, the MDIAMCB does not contain any vulnerable assets like the cryptographic keys. Thus, the solution ensures the principles "secure by design" and "secure by default".

Compared to known solutions, this invention does not require that the end-user must authenticate himself before using the MD. All involved system elements do not have to transmit or store any end-user information. Thus, the present invention can ensure the principles "privacy by design" and "privacy by default".

Compared to known solutions, only one, simple API call is used to request a certificate and/or signature from the MDIAMCB. Therefore, the API may be easier to implement by the DCD manufacturer and the MDIAMCB may be easier to maintain. The proposed method can be more robust against connection issues because everything can be done in one API call (i.e., POST request/response).

Compared to known solutions, the present invention can support that the DCD requests a certificate/signature over the DCDCB that cannot be modified undetected in-between and can be truly generally shared even with a malicious actor. With that, a third-party manufacturer may take care for the connection between the MD and the DCD, the DCD and the DCDCB, and the DCDCB and the MDIAMCB. The MD manufacturer may need only to take care for the end in the MD and on the MDIAMCB. This can reduce the threat surface of the MD and MDIAMCB. In addition, the requirements of the MDIAMCB can be reduced regarding reliable connection, high up-time, and good load-balancing.

Compared to known solutions, the present invention can supports auditing of MDs, DCDs, and DCDCBs stored on the MDIAMCB that is much easier accessible for the MD manufacturer as the MD itself in the market. This auditing can include which DCD instance over which DCDCB requested when to which MD instance what kind of access/control.

Compared to known solutions, the present invention can supports protecting, detecting, and responding to cybersecurity incidents. If a DCD or DCDCB from a third party or the MD manufacturer is hacked to request illegal certificates from the MDIAMCB, with this invention, the MDIAMCB can detect automatically this by unusual request behavior of the DCD and/or the DCDCB and prevent further leakage of certificates. Unusual requests to the MDIAMCB can be detected because a legitimate DCD would only request one medical device-constrained certificate/signature over the lifetime of the MD and a new MD-wildcard certificate/signature when the current one is before expiring. For example, a MD-constrained certificate may be requested every 5-6 months and one MD-wildcard certificate every 11-12 months. A hacker will perform more attempts during trying or needs more to actually use the hacked devices. Thus, on the MDIAMCB-side much more request of the hacked DCD in the same time frame would be observed. The impact of a hacked DCD and/or DCDCB may be after closing the data leak timely limited via the DCD certificate lifetime. The DCD certificate lifetime may adapted to the MD use scenarios and written into the certificate by the MDIAMCB during certificate creation. For example, the MD-constrained may be two years and the MD-wildcard one year.

Depending on the use scenario of the MD, the DCD certificate lifetime of the MD-wildcard certificate can be further limited with a DCD certificate usage time. The DCD certificate usage time may be shorter than the operation time of the MD. The DCD certificate usage time will enforce that after a MD-wildcard certificate was used to create a secure connection with a MD, the MD-wildcard certificate must be replaced with a MD-constrained certificate. For example, the DCD certificate usage time may be 30 days. This enforcement of the certificate replacement may allow tracking all DCD-MD combinations in the market even when a MD-wildcard certificate was used in the first place when a connection to the cloud backends was not possible. On the other side, the DCD certificate usage time may further limit the usage duration of certificates requested by the hacked DCD and/or DCDCB. For example, for a MD which requires a prescription (e.g., insulin pump, CGM), the "health care provider" (HCP) and/or MD manufacture can detect when someone tries to use unauthorized requested MD-wildcard certificates, because the DCD certificate usage Time will force this person to request much more MDs as required in the operation time of the MD. For example, the MD manufacturer can see and proof in a MD service and investigation case which DCDCB (and with that which manufacturer) is responsible for the leakage because the DCD manufacturer name is bound to the certificate (i.e., MD-wildcard and MD-constrained) used with the MD. For example, the MD manufacturer can see which MD are directly affected because the MD serial number is bound to the DCD-MD-constrained certificate. With this information, the MD manufacturer can over the corresponding sales organization easier inform the affected end-user.

Compared to known solutions, the present invention can allow that the MDIAMCB may grant different access and/or controls rights to the DCD based on the DCD manufacture itself and/or DCD type. This can even be changed as needed on the MDIAMCB side without changing the MD nor requiring direct access to the MD in the market. However, a certificate signing request (CSR) / signature request created by the DCD can by design not be modified without getting blocked. With this invention the MDIAMCB can add additional information via X.509 arbitrary extensions to the created X.509 certificate / signature extensions to modify the behavior of the MD used with this certificate / signature. The behavior of the MD may depend on the implemented functionality. This functionality can be used wherever the MD manufacturer wants to differentiate the solution from each other and from those of third parties. Examples of extended functionalities may be:
- The default usage time of a certificate/signature can be reduced for a trial.
- The default usage time of a certificate/signature can be extended to the operation time of an embedded DCD.
- A DCD can normally only break its own secure connection to a MD. However, if the DCD is lost or broken (e.g., smartphone), also the MD must be thrown away which would be expensive for a MD that can still be used for several months. A DCD of the MD manufacturer with end-user authorization can break the bond of the Third-Party DCD to a MD to make the MD reusable.
- Access to specific functions of the MD are limited to the DCDs of the MD manufacturer.
- Only a specific type of DCD can have access to specific functions such as calibrating the MD, but other DCD types not.
- Only a specific type of DCD can have access to raw data in the MD, but other DCD types not.
- The MD manufacturer can enable for a DCD instance (i.e., per end-user) and/or DCD type (i.e., all DCDs of this kind from a DCD manufacture) specific features such as "Silencing of Alarms" of the MD.
- In general, a DCD from one manufacturer can additional functionality be granted compared to others.

The present invention can support DCDs that have no internet connection. For example, in that case, an extended MD wildcard certificate/signature may be stored in the DCD during its production. The creation of the certificate/signature can be done by the MDIAMCB (with the medical device production system (MDPS) behave as a DCDCB, e.g., low-volume third-party DCDs), a dedicated MDIAMCB only for production (e.g., high-volume third-party DCDs), or a dedicated "Certificate Authority" (CA) inside the DCD production environment (with the same Root certificate than MDIAMCB). The DCD certificate lifetime and DCD certificate usage time may be adapted to the DCD lifetime. On the other side, the same MDs can be used with DCDs with or without internet connection using the same MD interface.

The present invention can support the ability to block unsafe identified hardware/software combinations of the DCD and MD in the market, as they become known.

Summarizing and without excluding further possible embodiments, the following embodiments may be envisaged:
Embodiment 1. A method for medical device identity and access management, the method comprising the following steps
   a) a medical device to be controlled by a digitally connected device transmitting, via an untrusted connection, to the digitally connected device identifying information from the medical device, wherein the medical device comprises at least one interface for communication with the digitally connected device specified by the medical device manufacturer;
   b) a medical device identity and access management cloud backend controlled by the medical device manufacturer
      receiving an application programming interface (API) request from the digitally connected device, wherein the API request comprises a request for authentication information generated by the digitally connected device, wherein the request for authentication information comprises identifying information about the digitally connected device,
      generating, upon verifying and validating the API request and the request for authentication information, the authentication information comprising a certificate or a signature, wherein the authentication information depends on the identifying information of the digitally connected device as pre-specified by the medical device manufacturer,
      signing the authentication information by using a private key of the medical device identity and access management cloud backend, and transmitting an API response comprising the signed authentication information to the digitally connected device;
   c) receiving via the untrusted connection at the medical device from the digitally connected device the signed authentication information, wherein, upon
      verifying and validating the authentication information at the medical device, an application layer security is established between the medical device and the digitally connected device using at least one cryptographic key exchange procedure.
Embodiment 2. The method according to the preceding embodiment, wherein the medical device identity and access management cloud backend grants with the signed authentication information to the digitally connected device authorization to all or a subset of functionalities of the medical device.
Embodiment 3. The method according to any one of the preceding embodiments, wherein the signed authentication information can be used by the medical device and/or medical device identity and access management cloud backend to keep the digitally connected device accountable for its commands towards the medical device.
Embodiment 4. The method according to any one of the preceding embodiments, wherein in step b), the API request is transmitted from the digitally connected device over a digitally connected device cloud backend and the API response is transmitted over the digitally connected device cloud backend to the digitally connected device.
Embodiment 5. The method according to any one of the preceding embodiments, wherein the medical device is selected from the group consisting of: an insulin pump, a continuous glucose monitoring device, a blood glucose monitoring device, a sport and fitness device, or a combination of this functions in one device.
Embodiment 6. The method according to any one of the preceding embodiments, wherein the digitally connected device comprises at least one element selected from the group consisting of: a dedicated controller hardware, a lockdown smartphone, or a consumer smartphone.
Embodiment 7. The method according to any one of the preceding embodiments, wherein the medical device, digitally connected device, digitally connected device cloud backend, and medical device identity and access management cloud backend have a zero trust relationship.
Embodiment 8. The method according to any one of the preceding embodiments, wherein data exchange between the digitally connected device and the digitally connected device cloud backend and between the digitally connected device cloud backend and the medical device identity and access management cloud backend is performed by using transport layer security.
Embodiment 9. The method according to any one of the preceding embodiments, wherein the manufacturer of the medical device, the medical device identity and access management cloud backend, the digitally connected device, and/or digitally connected device cloud backend is identical or are different manufacturers.
Embodiment 10. The method according to any one of the preceding embodiments, wherein the medical device, the digitally connected device and the digitally connected device cloud backend, respectively, comprise a public key of the medical device identity and access management cloud backend.
Embodiment 11. The method according to any one of the preceding embodiments, wherein the method comprises at least one initializing step, wherein interface control information is shared between the medical device manufacturer and digitally connected device manufacturer, wherein the interface control information comprises one or more of information about interface to the medical device; public keys for transmission layer security; mobile gateways information; mobile entry points information; information about the API to the medical device identity and access management cloud backend; credentials for the interfaces such as URLs, VPN, tokens, and/or keying material.
Embodiment 12. The method according to any one of the preceding embodiments, wherein communication between the digitally connected device and the medical device is performed via Bluetooth BR/EDR, Bluetooth LE, an IEEE 802.11 wireless protocol ("WiFi"), or Near Field Communication.
Embodiment 13. The method according to any one of the preceding embodiments, wherein the identifying information from the medical device comprises one or more of medical device type ID(s), medical device instance ID, medical device hardware version(s), medical device software version(s), and/or medical device nonce.
Embodiment 14. The method according to any one of the preceding embodiments, wherein the cryptographic key pair generated at the digitally connected device comprises an ephemeral public and private key pair and/or a static public and private key pair, wherein the ephemeral public and private key pair is constrained for a medical device instance, wherein the static public and private key pair relates to all medical device instances of one type of medical device.
Embodiment 15. The method according to any one of the preceding embodiments, wherein the identifying information from the digitally connected device comprises one or more of digitally connected device type ID(s), digitally connected device instance ID, digitally connected device hardware version(s), and/or digitally connected device software version(s).
Embodiment 16. The method according to any one of the preceding embodiments, wherein the authentication information comprises a public key of a cryptographic key pair generated by the digitally connected device for usage with the medical device, wherein the request for authentication information is signed with a private key of said crypto-graphic key pair.
Embodiment 17. The method according to any one of the preceding embodiments, wherein the digitally connected device sends the API request to the medical device identity and access management cloud backend.
Embodiment 18. The method according to any one of the preceding embodiments, wherein the digitally connected device sends the API request to the digitally connected device cloud backend, wherein the digitally connected device cloud backend, upon verifying and validating the API request and the request for authentication information, sends another API request to the medical device identity and access management cloud backend.
Embodiment 19. The method according to any one of the preceding embodiments, wherein the digitally connected device cloud backend receives the API response from the medical device identity and access management cloud backend, wherein the digitally connected device cloud backend, upon verifying and validating the API response and the signed authentication information, sends another API response to the digitally connected device.
Embodiment 20. The method according to any one of the preceding embodiments, wherein the medical device identity and access management cloud backend receives the API request from the digitally connected device, wherein the medical device identity and access management cloud backend, upon verifying and validating the API request and the request for authentication information, sends an API response with the signed authentication information to the digitally connected device.
Embodiment 21. The method according to any one of the preceding embodiments, wherein the medical device identity and access management cloud backend receives the API request from the digitally connected device cloud backend, wherein the medical device identity and access management cloud backend, upon verifying and validating the API request and the request for authentication information, sends an API response with the signed authentication information to the digitally connected device cloud backend.
Embodiment 22. The method according to any one of the preceding embodiments, wherein establishing the application layer security comprises generating a shared secret, wherein the digitally connected device sends a request for key agreement to the medical device, wherein the request comprises the signed authentication information, wherein the medical device, in case the signed authentication information is verified and validated, performs its part of the key agreement, wherein the digitally connected device, in case the key agreement information from the medical device is verified and validated, performs its part of the key agreement, wherein the shared secret is used as a key or is used for deriving another key, wherein the key or the derived key is used for subsequent communication between the digitally connected device and the medical device.
Embodiment 23. The method according to any one of the preceding embodiments, wherein the digitally connected device cloud backend comprises at least one API, wherein the API is a Representational State Transfer (REST) or a Simple Object Access Protocol (SOAP) API.
Embodiment 24. The method according to any one of the preceding embodiments, wherein the medical device identity and access management cloud backend comprises at least one API, wherein the API is a Representational State Transfer (REST) or a Simple Object Access Protocol (SOAP) API.
Embodiment 25. The method according to any one of the preceding embodiments, wherein the request for authentication information comprises a certificate signing request or a data structure with a signature defined by the medical device manufacturer.
Embodiment 26. The method according to any one of the preceding embodiments, wherein a key agreement between medical device and digitally connected device is performed according to Diffie-Hellman (DH) key agreement procedure, Password Authenticated Key Exchange by Juggling (J-PAKE) key agreement procedure, or Elliptic-curve Diffie-Hellman (ECDH) key agreement procedure.
Embodiment 27. The method according to any one of the preceding embodiments, wherein the signed authentication information comprises the medical device instance ID.
Embodiment 28. The method according to any one of the preceding embodiments, wherein the signed authentication information comprises the medical device type ID.
Embodiment 29. The method according to any one of the preceding embodiments, wherein the signed authentication information comprises a MD certificate/signature nonce.
Embodiment 30. The method according to any one of the preceding embodiments, wherein the signed authentication information grants at least one access level, wherein the access level is pre-specified by the medical device manufacturer.
Embodiment 31. The method according to any one of the preceding embodiments, wherein the signed authentication information comprises an unconstrained signed authentication information.
Embodiment 32. The method according to the preceding embodiment, wherein, when the unconstrained signed authentication information is used, limited access to the medical device is granted.
Embodiment 33. The method according to any one of the preceding embodiments, wherein a default configuration stored in the medical device during production medical device is modified by the medical device identity and access management cloud backend through adding additional configuration information to the signed authentication information, wherein the configuration information comprises one or more of access rights granted, use time of the signed authentication information, operation time of the medical device, and/or activation/deactivation of medical device functions.
Embodiment 34. The method according to any one of the preceding embodiments, wherein the method comprises monitoring by the medical device identity and access management cloud backend storing digitally connected device to medical device binding information.
Embodiment 35. The method according to any one of the preceding embodiments, wherein the method comprises monitoring by the medical device identity and access management cloud backend one or more of: a connection of medical device and digitally connected device; which digitally connected device instance is connected with which medical device instance; which digitally connected device instance over which digitally connected device cloud backend instance requests; frequency of requests from the digitally connected device and/or digitally connected device cloud backend.
Embodiment 36. The method according to any one of the preceding embodiments, wherein the method comprises Identification, Authentication, Authorization, and Accountability (IAAA) of the involved system element by the medical device identity and access management cloud backend.
Embodiment 37. The method according to any one of the preceding embodiments, wherein the method comprises detect and block unsafe combinations of medical device and digitally connected device by the medical device identity and access management cloud backend not granting a signed authentication information and triggering alerts based on one or more of the identifying information from the medical device, digitally connected device, and/or digitally connected device cloud backend.
Embodiment 38. The method according to any one of the preceding embodiments, wherein the method comprises protecting, detecting, and responding to cybersecurity attacks by the medical device identity and access management cloud backend not granting a signed authentication information and triggering alerts based on one or more of the identifying information from the medical device, identifying information from the digitally connected device, identifying information from the digitally connected device cloud backend, API request(s), frequency of requests, origin of request(s), and/or date/time of request(s).
Embodiment 39. The method according to any one of the preceding embodiments, wherein the method comprises one or more of: monitoring of the involved system elements, identifying of the involved system elements, authenticating of the involved system elements, authorizing of the involved system elements, and accounting of the involved system elements; detecting and blocking unsafe combinations of medical device and digitally connected device; and/or protecting, detecting, and responding to cybersecurity attacks.
Embodiment 40. The method according to anyone of the preceding method embodiments, wherein the method is computer-implemented.
Embodiment 41. A medical device identity and access management system comprising at least one medical device, at least one medical device identity and access management cloud backend, and at least one digitally connected device, wherein the medical device identity and access management system is configured for performing a method for medical device identity and access management according to any one of the preceding embodiments.
Embodiment 42. A computer program comprising instructions which, when the program is executed by the medical device identity and access management system according to embodiment 40, cause the medical device identity and access management system to perform the method according to any one of the preceding embodiments referring to a method.
Embodiment 43. A computer-readable storage medium comprising instructions which, when the instructions are executed by the medical device identity and access management system according to embodiment 40, cause the medical device identity and access management system to perform the method according to any one of the preceding embodiments referring to a method.
Embodiment 44. A non-transient computer-readable medium including instructions that, when executed by one or more processors, cause the one or more processors to perform the method according to any one of the preceding embodiments referring to a method.

### Short description of the Figures

Further optional features and embodiments will be disclosed in more detail in the subsequent description of embodiments, preferably in conjunction with the dependent claims. Therein, the respective optional features may be realized in an isolated fashion as well as in any arbitrary feasible combination, as the skilled person will realize. The scope of the invention is not restricted by the preferred embodiments. The embodiments are schematically depicted in the Figures. Therein, identical reference numbers in these Figures refer to identical or functionally comparable elements.
- Figure 1: shows an embodiment of a medical device identity and access management system; and
- Figure 2: shows an exemplary embodiment of a method for identity and access management using an exemplary medical device identity and access management system.

### Detailed description of the embodiments

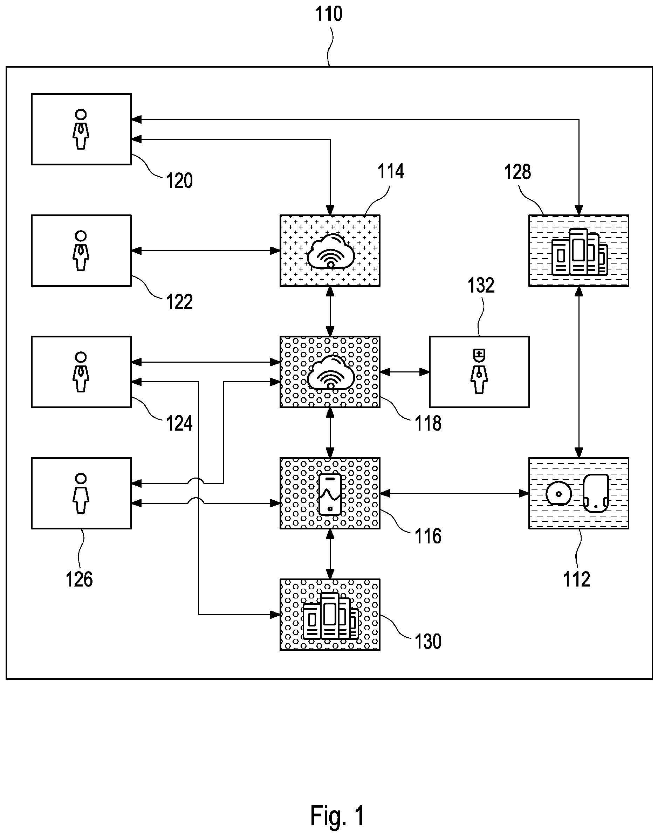

Figure 1 shows an embodiment of a medical device identity and access management system (MDIAMS) 110. The MDIAMS 110 comprises at least one medical device (MD) 112. The MD 112 may be a small, battery-powered MD. The MD 112 may be a portable medical device. The MD 112 may be a personal health devices such as a diabetes management device. The MD 112 may be a point-of-care device. For example, the MD 112 may be selected from the group consisting of an insulin pump, a continuous glucose monitoring device, a blood glucose monitoring device, a sport and fitness device, or a combination of this functions in one device. The software part in the MD 112 may be optimized for embedded usage regarding processing power, memory usage, and energy consumption

The MDIAMS 110 comprises at least one medical device identity and access management cloud backend (MDIAMCB) 114 for which the MD manufacturer is responsible, at least one digitally connected device (DCD) 116, e.g. of a third party or of the MD manufacturer 120, and optionally at least one digitally connected device cloud backend (DCDCB) 118, e.g. of a third party or of the MD manufacturer 120. The DCD may comprise at least one element selected from the group consisting of a dedicated controller hardware, a lockdown smartphone, or a consumer smartphone. For example, the DCD may be a type of embedded DCD (e.g., a diabetes manager with dedicated controller hardware), a lockdown smartphone (e.g., at least one application (App) pre-installed on a dedicated smartphone, wherein the smartphone is shipped with the medical solution), or a consumer smartphone (e.g., App downloaded from a smartphone application store). The DCD may be a third party controller or may be manufactured by the same manufacturer as the personal medical device.

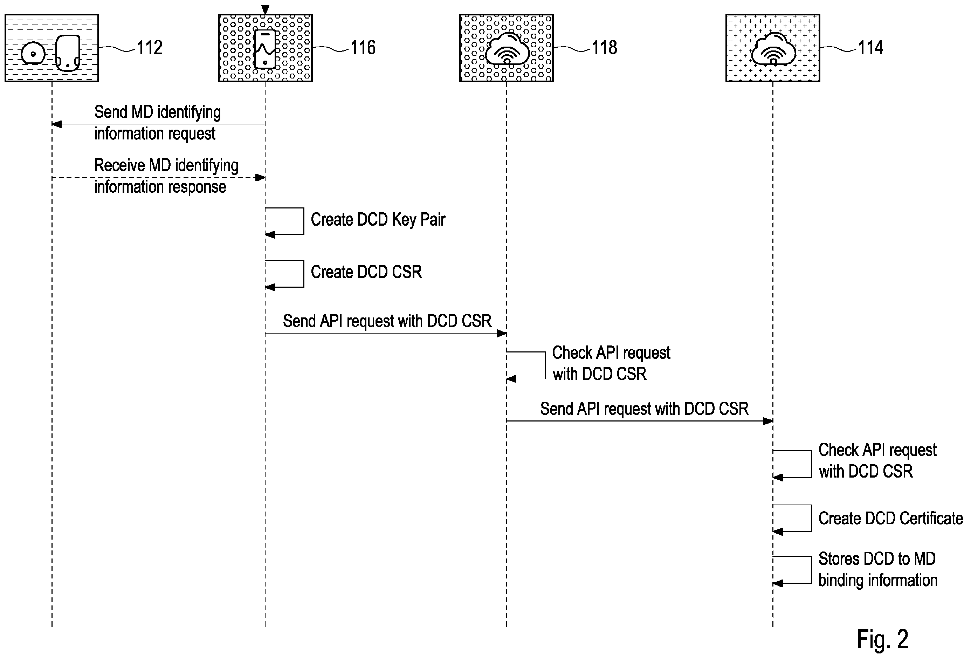

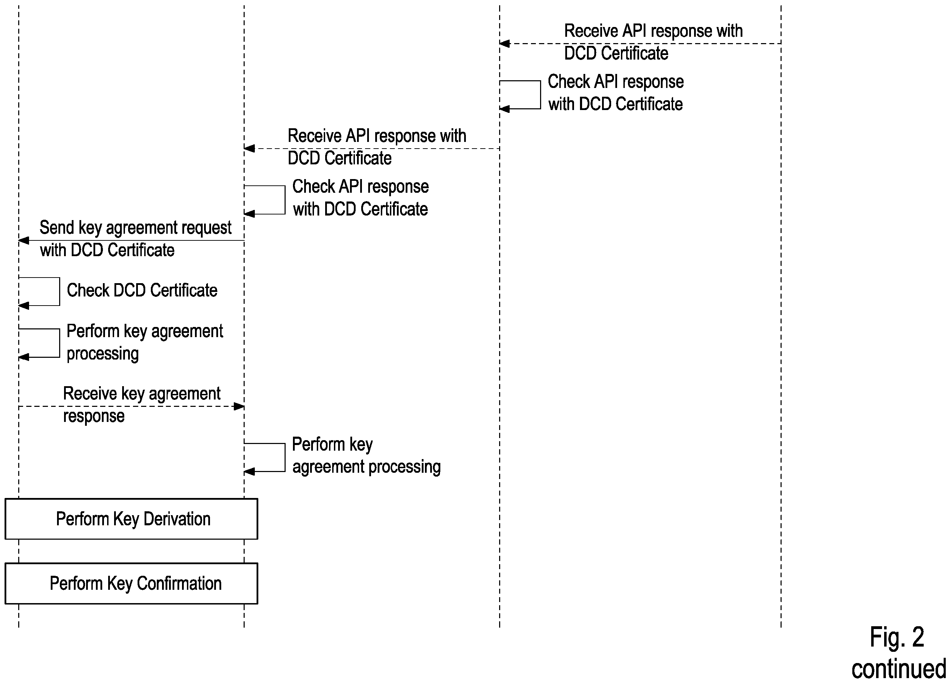

The MDIAMS 110 is configured for performing a method for medical device identity and access management according to the present invention, e.g. as described and shown with respect to Figure 2.

In Figure 1, data exchange is shown with arrows. For example, the DCD 116 can exchange data with the DCDCB 118 for which the DCD manufacturer is responsible. The DCD manufacturer and the MD manufacturer 120 can be the same or a third party. The MDIAMS 110 may support all kind of DCDs like embedded DCD, lockdown smartphone, or consumer smartphone. The MD 112, DCD 116, DCDCB 118, and MDIAMCB 114 can have a zero trust relationship meaning that the system elements do not trust each other by default and the security of each one does not depend on the others. The MDIAMS 110 has a cloud service part in the MDIAMCB 114 and an embedded software part in the MD 112. By controlling these two endpoints, the MDIAMS 110 can enforce the required data exchange and security over any DCD 116 and DCDCB 118, e.g. from a third party. In addition, in Figure 1, a medical device production system (MDPS) 128 and the digitally connected device production system (DCDPS) 130 are depicted. A health care provider (HCP) 132 may further be involved if a prescription for the medical device is required.

In the exemplary MDIAMS 110 on the left side potential different parties participating in the MDIAMS 110 are shown, e.g., the MD manufacturer 120, a business owner 122, a DCD manufacturer 124 (in this embodiment different from the MD manufacturer 120), and an end-user 126 (e.g., a person with diabetes or a caregiver).

Figure 2 shows an exemplary embodiment of a method for identity and access management using an exemplary MDIAMS 110, e.g. as described with respect to Figure 1. A scenario to grant the DCD manufacturer access to the MD 112. On the top row, the MD 112, DCD 116, DCDCB 118, and MDIAMCB 114 are depicted, wherein the columns below the respective element shows which step is performed by which entity.

The method comprises the following steps
a) the MD 112 to be controlled by the DCD 116
   transmitting, via an untrusted connection, to the DCD 116 identifying information from the MD 112, wherein the MD 112 comprises at least one interface for communication with the DCD 116 specified by the MD manufacturer 120;
b) a MDIAMCB 114 controlled by the MD manufacturer 120
   receiving an application programming interface, API request from the DCD, wherein the API request comprises a request for authentication information generated by the DCD 116, wherein the request for authentication information comprises identifying information about the DCD 116,
   generating, upon verifying and validating the API request and the request for authentication information, the authentication information comprising a certificate or a signature, wherein the authentication information depends on the identifying information of the DCD 116 as pre-specified by the MD manufacturer 120,
   signing the authentication information by using a private key of the MDIAMCB 114, and
   transmitting an API response comprising the signed authentication information to the DCD 116;
c) receiving via the untrusted connection at the MD 112 from the DCD 116 the signed authentication information, wherein, upon verifying and validating the authentication information at the MD 112, an application layer security is established between the MD 112 and the DCD 116 using at least one cryptographic key exchange procedure.

To enable a DCD 116 manufacturer to control a MD 112 with his DCDs 116, a so-called Interface Control Document (ICD) can be shared. The ICD can be for all external and internal DCD manufacturer the same and contains information about the interface to the medical device (e.g., Bluetooth LE) and the API to the MDIAMCB 114 (e.g., RESTful). As part of the DCD manufacturer onboarding, the MD manufacturer 120 can register each DCD manufacturer, the DCDCB 118, and each DCD type at the MDIAMCB 114 depending on how detailed the audit trail of the MDIAMCB 114 should be. During that the DCD manufacturer needs to provide a public key (e.g., X.509 certificate) of his DCDCB 118 so that it can be stored in the MDIAMCB 114. On the other side the MD manufacturer 120 provides to the DCD manufacturer for the API to MDIAMCB 114 the necessary credentials (e.g., URLs, VPN, keying material) bound to the DCDCB 118.

As shown in Figure 2, the MD 112 may be available e.g. via Bluetooth LE for the DCD 116. The method may start with the MD 112 transmitting, via an untrusted connection, to the DCD 116 identifying information from the MD 112. Transport Layer Security may be used. For example, the DCD 116 sends Bluetooth-encrypted "Bluetooth LE requests" for "MD type ID", "MD certificate/signature nonce" and "MD instance ID" and receives from the MD 112 Bluetooth-encrypted "Bluetooth LE responses" for "MD type ID", "MD certificate/signature nonce" and "MD instance ID".

Figure 2 shows two exemplary scenarios for the next steps of the DCD 116. In a first scenario, the MD 112 is available, e.g. via Bluetooth LE for the DCD 116. In this case, the DCD 116 may create a DCD ephemeral key pair. The DCD 116 may create a new ephemeral key pair for each MD instance to which it wants to establish a secure connection, i.e. used in exactly on DCD/MD instance key-establishment, compare with recommendations in NIST SP 800-56A. The DCD 116 further creates a DCD certificate signing request (CSR) medical device-constrained signed with the DCD ephemeral private key. For example, the DCD CSR may comprise one or more of: DCD manufacturer name, DCD type ID, DCD instance ID, MD type ID, MD instance ID, MD certificate nonce, potential additional entries, DCD public additional entries, DCD public key, DCD signature.

In a second scenario, the MD may not be available or for future use, the DCD 116 may create a DCD static key pair. The DCD 116 may create a new static key pair for each type of MD 112 to which it wants to establish in the future a secure connection (i.e., intended for use in multiple DCD/MD instance key-establishment, compare with recommendations in NIST SP 800-56A). The DCD 116 further creates a DCD CSR MD-wildcard signed with the DCD static private key.

Next, the DCD 116 may send a TLS-encrypted API request including the DCD CSR to the DCDCB 118. The DCDCB 118 may verify and validate the API request and the DCD CSR. The DCDCB 118 then may send a TLS-encrypted API request including the DCD CSR to the MDIAMCB 114. The MDIAMCB 114 verifies and validates the API request and the DCD CSR. The MDIAMCB 114 may create a DCD certificate based on the DCD CSR signed with a MDIAMCB certificate authority (CA), e.g. a component inside the MDIAMCB that actually create the certificate/signature, static private key. The DCDCB 118 may receive a TLS-encrypted API response including the DCD certificate from the MDIAMCB 114. Next, the DCDCB 118 may verify and validate the API response and the DCD certificate. The DCD 116 may receive from the DCDCB 118 a TLS-encrypted API response including the DCD certificate. The DCD 116 may verify and validate the API response and the DCD certificate. For example, the DCD certificate may comprise one or more of: MD manufacturer name, DCD manufacturer name, DCD type ID, DCD instance ID, MD type ID, MD instance ID, MD certificate nonce, MDIAMCB type name, potential additional entries, DCD public key, MDIAMCB signature.

The MD 112 may receive via the untrusted connection, e.g. via Bluetooth LE, from the DCD 116 a Bluetooth LE request for performing a key exchange ECDH procedure containing the DCD certificate. The MD 112 may verify and validate the DCD certificate and may subsequently perform the ECDH procedure. The DCD 116 may receive a Bluetooth LE response for key exchange ECDH procedure containing the public key of the MD 112. The DCD 116 upon verification and validation of the public key of the MD 112 may perform the ECDH procedure. The MD 112 and the DCD 116 may subsequently derive keying material and complete the key confirmation. After performing these steps, access is granted to the medical device for the DCD manufacturer.

### List of reference numbers

- 110: Medical Device Identity and Access Management System (MDIAMS)
- 112: Medical Device (MD)
- 114: Medical Device Identity and Access Management Cloud Backend (MDIAMCB)
- 116: Digitally Connected Device (DCD)
- 118: Digitally Connected Device Cloud Backend (DCDCB)
- 120: Medical Device Manufacturer
- 122: Business Owner
- 124: Digitally Connected Device Manufacturer
- 126: End-User
- 128: Medical Device Production System (MDPS)
- 130: Digitally Connected Device Production System (DCDPS)
- 132: Health Care Provider (HCP)

## Claims

1. A method for medical device identity and access management, the method comprising the following steps
a) a medical device (112) to be controlled by a digitally connected device (116)
transmitting, via an untrusted connection, to the digitally connected device (116) identifying information from the medical device (112), wherein the medical device (112) comprises at least one interface for communication with the digitally connected device (116) specified by the medical device manufacturer (120);
b) a medical device identity and access management cloud backend (114) controlled by the medical device manufacturer (120)
receiving an application programming interface, API, request from the digitally connected device (116), wherein the API request comprises a request for authentication information generated by the digitally connected device (116), wherein the request for authentication information comprises identifying information about the digitally connected device (116),
generating, upon verifying and validating the API request and the request for authentication information, the authentication information comprising a certificate or a signature, wherein the authentication information depends on the identifying information of the digitally connected device (116) as pre-specified by the medical device manufacturer (120),
signing the authentication information by using a private key of the medical device identity and access management cloud backend (114), and
transmitting an API response comprising the signed authentication information to the digitally connected device (116);
c) receiving via the untrusted connection at the medical device (112) from the digitally connected device (116) the signed authentication information, wherein, upon verifying and validating the authentication information at the medical device (112), an application layer security is established between the medical device (112) and the digitally connected device (116) using at least one cryptographic key exchange procedure.

2. The method according to the preceding claim, wherein the medical device identity and access management cloud backend (114) grants with the signed authentication information to the digitally connected device (116) authorization to all or a subset of functionalities of the medical device (112).

3. The method according to any one of the preceding claims, wherein in step b), the API request is transmitted from the digitally connected device (116) over a digitally connected device cloud backend (118) to the medical device identity and access management cloud backend (114) and the API response is transmitted from the medical device identity and access management cloud backend (114) over the digitally connected device cloud backend (118) to the digitally connected device (116).

4. The method according to any one of the preceding claims, wherein the identifying information from the medical device (112) comprises one or more of medical device type ID(s), medical device instance ID, medical device hardware version(s), medical device software version(s), and/or medical device nonce.

5. The method according to any one of the preceding claims, wherein the cryptographic key pair generated at the digitally connected device (116) comprises an ephemeral public and private key pair and/or a static public and private key pair, wherein the ephemeral public and private key pair is constrained for a medical device instance, wherein the static public and private key pair relates to all medical device instances of one type of medical device.

6. The method according to any one of the preceding claims, wherein the identifying information from the digitally connected device (116) comprises one or more of digitally connected device type ID(s), digitally connected device instance ID, digitally connected device hardware version(s), and/or digitally connected device software version(s).

7. The method according to any one of the preceding claims, wherein the authentication information comprises a public key of a cryptographic key pair generated by the digitally connected device (116) for usage with the medical device (112), wherein the request for authentication information is signed with a private key of said cryptographic key pair.

8. The method according to any one of the preceding claims, wherein the request for authentication information comprises a certificate signing request or a data structure with a signature defined by the medical device manufacturer (120).

9. The method according to any one of the preceding claims, wherein the signed authentication information comprises an unconstrained signed authentication information, wherein, when the unconstrained signed authentication information is used, limited access to the medical device (112) is granted.

10. The method according to any one of the preceding claims, wherein a default configuration stored in the medical device (112) during production medical device is modified by the medical device identity and access management cloud backend (114) through adding additional configuration information to the signed authentication information, wherein the configuration information comprises one or more of access rights granted, use time of the signed authentication information, operation time of the medical device (112), and/or activation/deactivation of medical device functions.

11. The method according to any one of the preceding claims, wherein the method comprises monitoring by the medical device identity and access management cloud backend (114) storing digitally connected device to medical device binding information.

12. A medical device identity and access management system (110) comprising at least one medical device (112), at least one medical device identity and access management cloud backend (114), and at least one digitally connected device (116), wherein the medical device identity and access management system (110) is configured for performing a method for medical device identity and access management according to any one of the preceding claims.

13. A computer program comprising instructions which, when the program is executed by the medical device identity and access management system (110) according to claim 12, cause the medical device identity and access management system (110) to perform the method according to any one of the preceding claims referring to a method.

14. A computer-readable storage medium comprising instructions which, when the instructions are executed by the medical device identity and access management system (110) according to claim 12, cause the medical device identity and access management system (110) to perform the method according to any one of the preceding claims referring to a method.

15. A non-transient computer-readable medium including instructions that, when executed by one or more processors, cause the one or more processors to perform the method according to any one of the preceding claims referring to a method.
